# EUROPEAN PATENT SPECIFICATION

(11) **EP 2 997 547 B1**
(45) Date of publication and mention of the grant of the patent: **10.05.2017**
(21) Application number: 13773982.7
(22) Date of filing: 20.09.2013
(51) Int. Cl.: G06T 15/00, G06T 15/50, G06F 9/44

(54) **PRIMITIVE-BASED COMPOSITION**
PRIMITIVBASIERTE ZUSAMMENSETZUNG
COMPOSITION À BASE DE PRIMITIVES

(30) Priority: 15.05.2013 US 201313895239
(43) Date of publication of application: 23.03.2016
(73) Proprietor: Microsoft Technology Licensing, LLC, Redmond, WA 98052 (US)
(72) Inventor: BLANCO, Leonardo E., Redmond, Washington 98052-6399 (US); JORDAN, Bede A., Redmond, Washington 98052-6399 (US); CLARK, Brendan J., Redmond, Washington 98052-6399 (US); PELTON, Blake D., Redmond, Washington 98052-6399 (US); MONCAYO, Silvana Patricia, Redmond, Washington 98052-6399 (US); BISHOP, Jesse, Redmond, Washington 98052-6399 (US); SRIRAM, Vidhya, Redmond, Washington 98052-6399 (US); ANTONIJEVIC, Aleksandar, Redmond, Washington 98052-6399 (US); YANG, Meng, Redmond, Washington 98052-6399 (US); PRIESTLEY, Joshua Warren, Redmond, Washington 98052-6399 (US); MASCARENHAS, Adrian A., Redmond, Washington 98052-6399 (US); CHEN, Ling, Redmond, Washington 98052-6399 (US); KEEGAN, Leah M., Redmond, Washington 98052-6399 (US); RISCHAR, Daniel C., Redmond, Washington 98052-6399 (US)
(74) Representative: Goddar, Heinz J.
(86) International application number: PCT/US2013/060776
(87) International publication number: WO 2014/185947

(56) References cited:
- US-A1- 2013 063 445
- Anonymous: "Shapes and Basic Drawing in WPF Overview", , 15 August 2012 (2012-08-15), pages 1-6, XP055179328, Retrieved from the Internet: URL:https://msdn.microsoft.com/en-us/libra ry/ms747393(v=vs.110).aspx [retrieved on 2015-03-25]
- Anonymous: "Windows Presentation Foundation - Wikipedia, the free encyclopedia", , 12 May 2013 (2013-05-12), XP055178911, Retrieved from the Internet: URL:http://en.wikipedia.org/w/index.php?ti tle=Windows_Presentation_Foundation&oldid= 554703406 [retrieved on 2015-03-24]
- Anonymous: "Painting with Solid Colors and Gradients Overview", , 15 August 2012 (2012-08-15), pages 1-6, XP055179330, Retrieved from the Internet: URL:https://msdn.microsoft.com/en-us/libra ry/ms754083(v=vs.110).aspx [retrieved on 2015-03-25]
- Anonymous: ".NET Framework version history - Wikipedia, the free encyclopedia", , 24 March 2015 (2015-03-24), XP055178688, Retrieved from the Internet: URL:http://en.wikipedia.org/wiki/.NET_Fram ework_version_history [retrieved on 2015-03-24]

## Description

### BACKGROUND

A wide variety of elements may be rendered on a computing device, such as icons, windows, animations, and so on. Further, the numbers of applications typically executed on the computing device continues to increase as well as the number of elements each of the applications typically provides, such as to provide additional functionality and a richer user experience.

However, this increase in elements may consume a significant amount of resources of the computing device, such as processor, memory, graphics hardware, and other resources. Accordingly, this consumption may also have an effect on execution of the applications themselves, responsiveness of the computing device to a user, and so on. Further, conventional rendering techniques could result in inefficient allocation or resources, thereby further exacerbating these issues.

US 20137063445 A1 discloses a composition system thread techniques are described. In one or more implementations, a composition system may be configured to compose visual elements received from applications on a thread that is executed separately than a user interface thread of the applications. As such, the composition system may execute asynchronously from a user interface thread of the application. Additionally, the composition system may be configured to expose one or more application programming interfaces (APIs) that are accessible to the applications. The APIs may be used for constructing a tree of objects representing the operations that are to be performed to compose one or more bitmaps. Further, these operations may be controlled by several API visual properties to allow applications to animate content within their windows and use disparate technologies to rasterize such content.

The article "Shapes and Basic Drawing in WPF Overview", 15 August 2012, pages 1-6, retrieved from the Internet at the URL:https://msdn.microsoft.com/en-us/library/ms747393(v=vs.11O).aspx discloses an overview of shapes and their basic functionality in the Windows Presentation Foundation framework.

Further functionality of the Windows Presentation Foundation framework is summarized in the article "Windows Presentation Foundation" in Wikipedia at URL: http://en.wikipedia.org/w/index.php?title=Windows∼Presentation∼Foundation&oldid=554703 406

### SUMMARY

Primitive-based composition techniques are described. In one or more implementations, a global composition system may be configured to perform rendering for a plurality of applications. For example, the global composition system may be configured to expose one or more application programming interfaces (APIs) that are accessible to the applications. The APIs may then be used to cause a single composition engine to perform the rendering for the plurality of applications. Further, the composition engine may support the use of primitives, which include one or more rendering instructions and thus an element associated with a visual to be rendered may be something other than a bitmap.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. 1 is an illustration of an environment in an example implementation that is operable to implement a global composition system.
FIG. 2 illustrates an example system in which the global composition system is illustrated in greater detail as including a composition engine of FIG. 1 as well as a user-mode library and object database module.
FIG. 3 depicts an example of a graph configured as a global composition tree that is consumable by a composition engine to render elements using a primitive.
FIG. 4 depicts another example of a graph configured as a global composition tree that is consumable by a composition engine to render elements using a primitive.
FIG. 5 depicts an example implementation of a primitive group.
FIG. 6 depicts an example implementation of rendering performed using a primitive group.
FIG. 7 depicts an example comparison of techniques to render a video player with transport controls that are blended into a single layer using the composition engine.
FIG. 8 depicts an example of content synchronization techniques using the composition engine.
FIG. 9 depicts a procedure in an example implementation in which a graph is generated having primitives to cause rendering of elements by a computing device.
FIG. 10 illustrates an example system that includes the computing device as described with reference to FIG. 1.
FIG. 11 illustrates various components of an example device that can be implemented as any type of computing device as described with reference to FIGS. 1-9 to implement embodiments of the techniques described herein.

### DETAILED DESCRIPTION

### Overview

Conventional techniques used to render elements by a computing device employed a distributed system in which each application was assigned a corresponding composition engine. Because of this, the different composition engines were unaware of what was being performed by other composition engines. This could lead to redundancies, unnecessary rendering of elements, and so on that could hinder the efficiency of a computing device that implemented the conventional techniques and thus could make these conventional techniques ill suited for use by "thin" computing devices.

Global composition techniques and primitive-based composition are described herein. These techniques include use of a single composition engine that is accessible by a plurality of different processes via one or more APIs. Thus, the composition engine may be made "aware" of what is being contributed by the various applications and how those elements relate. This knowledge may then be leveraged to improve efficiency in the rendering of elements of the applications. In one or more implementations, the composition engine runs asynchronous from threads belonging to those applications, which allows applications to cause content to be animated within their windows and use disparate rendering technologies to rasterize such content. Additionally, composition data from each process in the system may be managed in a single graph (e.g., a global composition tree) which allows the composition engine to perform global optimizations such as occlusion detection, as well as to mix and match content from multiple processes in an efficient and secure fashion.

This may also be leveraged to support primitive-based composition. A primitive may be thought of as a shape and content specified using one or more rendering instructions that are configured to instruct the composition engine on how to render an element. Thus, primitives may be used in place of allocations of large bitmaps in memory. For example, rather than allocate a bitmap in memory for a background having a single color, a solid color primitive may be used that includes rendering instructions for how to render the background, e.g., a shape and color. In this way, memory efficiency and rendering may be improved. Additionally, the primitives may be used in conjunction with the techniques described above regarding use of a single composition engine to further improve efficiency, such as occlusion detection and so on. Further discussion of these and other techniques may be found in relation to the following figures.

In the following discussion, an Example Composition Environment is first described that may employ the techniques described herein. A Primitive-based Composition section follows that describe sharing of compositional resources between processes, which may be implemented in the Example Composition System as well as other systems. Example procedures are then described which may be performed in the example environment as well as other environments. Consequently, performance of the example procedures, sharing of compositional resources, and the example environment are not to be limited to each of the other described implementation, those implementation being examples of a plurality of different implementations that may leverage the techniques described herein.

### Example Composition Environment

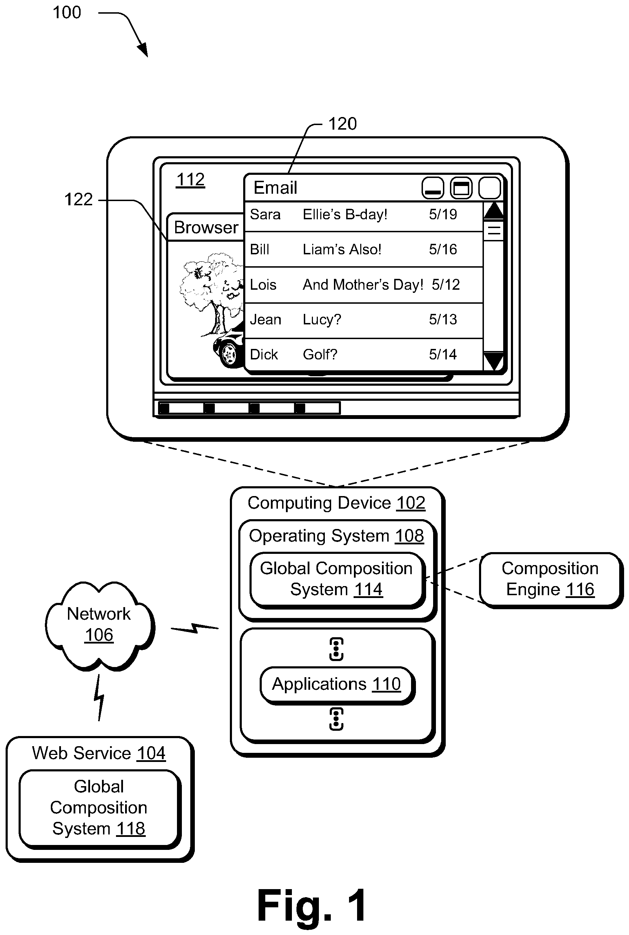

FIG. 1 is an illustration of an environment 100 in an example implementation that is operable to employ techniques described herein. The illustrated environment 100 includes a computing device 102 that is communicatively coupled to a web service 104 via a network 106. The computing device 102 as well as computing devices that may implement the web service 104 may be configured in a variety of ways.

For example, a computing device may be configured as a computer that is capable of communicating over the network 106, such as a desktop computer, a mobile station, an entertainment appliance, a set-top box communicatively coupled to a display device, a wireless phone, a game console, and so forth. Thus, the computing device 102 may range from full resource devices with substantial memory and processor resources (e.g., personal computers, game consoles) to a low-resource device with limited memory and/or processing resources (e.g., traditional set-top boxes, hand-held game consoles). Additionally, although a single computing device 102 is shown, the computing device 102 may be representative of a plurality of different devices, such as multiple servers utilized by a business to perform operations such as by the web service 104, a remote control and set-top box combination, an image capture device and a game console configured to capture gestures, and so on.

Although the network 106 is illustrated as the Internet, the network may assume a wide variety of configurations. For example, the network 106 may include a wide area network (WAN), a local area network (LAN), a wireless network, a public telephone network, an intranet, and so on. Further, although a single network 106 is shown, the network 106 may be configured to include multiple networks.

The computing device 102 is further illustrated as including an operating system 108. The operating system 108 is configured to abstract underlying functionality of the computing device 102 to applications 110 that are executable on the computing device 102. For example, the operating system 108 may abstract processing, memory, network, and/or display functionality of the computing device 102 such that the applications 110 may be written without knowing "how" this underlying functionality is implemented. The application 110, for instance, may provide data to the operating system 108 to be rendered and displayed by the display device 112 without understanding how this rendering will be performed.

The operating system 108 may also represent a variety of other functionality, such as to manage a file system and user interface that is navigable by a user of the computing device 102. An example of this is illustrated as a desktop that is displayed on the display device 112 of the computing device 102.

The operating system 108 is also illustrated as including a global composition system 114. The global composition system 114 may represent a system that includes a direct composition component that is configured to allow applications 110 to use a single global composition engine 116 (hereinafter also referred to simply as composition engine 116) to draw items on the display device 112. Although illustrated as part of an operating system 108, the global composition system 114 may be implemented in a variety of other ways, such as part of a browser, as a stand-alone module, and so forth. Further, the global composition system 114 may be distributed across the network 106, an example of which is illustrated as inclusion of a global composition system 118 on the web service 104.

User experiences (e.g., user interfaces generated for applications 110) may include a signification number of elements (e.g., objects) that may interact with each other, such as windows, animations (e.g., text scrolling), and so on. For example, a first window may correspond to an email application and a second window 122 may correspond to a browser as illustrated on the display device 112. Thus, a multitude of different elements may be rendered at any one particular point in time. Further, these different elements may have different refresh rates, such as an animation of a "ticker" display along with video and static text.

The global composition system 114 may be utilized to abstract this functionality such that different applications 110 may offload this rendering and thus be unaware of how the rendering is performed. For example, applications 110 may provide data that describe elements to be rendered, placement of the elements, and how the elements interrelate with each other.

Additionally, the global composition system 114 may support "independent" animation. An application 110, for instance, may communicate a declarative description of an animation that describes how an animation is to be rendered. For example, the description may describe what is being animated, a rate at which redraws are to occur, a location at which the animation is to begin, a curve over which the animation is to move, an ending location of the animation, an amount of time the animation is to be rendered, and so forth.

This rendering may then be performed by the global composition system 114 and continue without further instruction. In this way, the rendering of the animation is independent of the caller (e.g., the application 110), such that loss of communication with the application 110, inconsistent processing of the application 110, and so on does not have an effect on the rendering of the animation. Thereby, this may be used to improve "smoothness" and "fluidity" of the animation as well as resources of the computing device 102 (and even network 106 are further described below) by cutting down on the number of communications by the application 110 to render the animation.

Conventionally, each of the applications 110 that were executed by a computing device 102 interacted with a corresponding composition engine to perform the processing and rendering of a display for the respective application. Therefore, conventional composition engines were often implemented "per process." Accordingly, conventional techniques may involve execution of a plurality of different composition engines at any one time. Additionally, conventional composition engines were typically "not aware" of the rendering performed by other composition engines. This could result in inefficient use of resources of the computing device 102, such as to draw a window even though it may be occluded by another window which could result in unnecessary use of processor, graphical processor, memory, and other resources of the computing device 102.

In one or more implementations, the global composition system 114 follows a global architecture such that a plurality of applications 110 may access the composition engine 116, e.g., via an application programming interface. For example, a single composition engine 116 may be responsible for an entire desktop and elements from applications 110 that are currently being executed. Thus, the single composition engine 116 may be "aware" of the different elements that are to be rendered for the plurality of applications and react accordingly.

Continuing with the previous example, the composition engine 116 may be aware that an element of an application (e.g., a window) is to be occluded by an element to be rendered for another application, e.g., another window. As shown in FIG. 1, for instance, the application may have a window that is to be displayed behind the window 120 that corresponds to the email application. Previously, even though the corresponding window of the application was not viewable to a user of the computing device 102, the window was still rendered. However, the composition engine 116 may use the present techniques to skip the rendering of the occluded window, thereby conserving resources of the computing device 102.

The global composition system 114 may be used to provide a wide variety of functionality. As previously described, the global composition system 114 may perform global analysis of what is to be rendered by the plurality of applications and efficiently determine which of the elements are to be drawn, such as in the case of occlusion in which rendering of elements may be skipped as previously described. Additionally, resources may be pooled by the global composition system 114, such as to share intermediate memory by a plurality of applications 110 instead of fragmented memory as could be consumed by conventional composition engines both by the engines themselves as well as what is being drawn by the engines.

The global composition system 114 may also support security techniques. For example, the global composition system 114 may be employed to draw protected video, such as encrypted movies and corresponding licensing. For conventional composition engines, the application composes the content and then transfers the content to a corresponding composition engine. This may result in the content being "transferred in the clear" (e.g., transfer of uncompressed video frames) without the protections and thus the content could be exposed to malicious parties.

However, in one or more implementations described herein the content may be provided to the global composition system 114 and may be executed within a protected area that is not touchable directly by the applications 110. Thus, trust of the composition engine 116 to not further communicate the content may be used to protect that content. For instance, the composition engine may be relied upon to generate pixels for rendering without exposing those pixels to applications that are executed by the computing device 102. Thus, this "one way flow" provided through write-only access may help ensure that the wrong application (e.g., from a malicious entity) does not receive the unprotected content.

Further, conventional composition engines and corresponding applications "owned" a particular portion of a screen of a display device 112. Therefore, some display techniques were difficult to support using these conventional techniques. One such technique was transparency for multiple applications because the area of the display device 112 could be owned by one or the other conventional composition engines, but not both. For instance, a particular area of the display device 112 may involve windows from at least two different applications and their corresponding conventional composition engines. Conventionally, to support techniques such as transparency each instance of the windows was drawn to memory and then effects were applied to the combination, which was resource intensive.

However, because the global composition system 114 may be aware of the different windows and react accordingly, the desired result may be achieved without drawing the windows separately to memory beforehand and then applying the visual effects to the windows. For example, the global composition system 114 may utilize a single hierarchical tree that describes elements to be rendered and thus "know" how the elements relate. Therefore, the global composition system 114 may draw directly to memory of the computing device 102 without the intermediate steps that were performed using conventional techniques. Thus, these techniques may be employed by "thin" computing devices that could not employ conventional composition engines due to memory and/or processing limitations.

Additionally, conventional composition engines were generally executed asynchronously to support different rendering rates by different applications. Although this did support functionality such that rendering specified an application associated with one composition did not affect the rendering specified by another application, this could result in an inefficient use of computing device 102 resources.

Further, priorities assigned to the different conventional composition engines may cause errors both to the conventional composition engine as well as associated application. For instance, conventional composition engines may be given a relatively high priority for execution by a processor of the computing device 102. However, instances may occur in which the composition engines consume a signification amount of the resources, such as to support multiple animations. Because of this, the composition engines as well as the applications themselves may not have sufficient resources available to execute as intended when confronted with such resource intensive tasks.

In one or more implementations, the composition engine 116 may be assigned a high priority, e.g., a high thread priority may be assigned to the composition engine 116 relative to priorities assigned to other threads executed by the computing device 102. The global composition system 114 may then mange priority of how elements from the different sources are rendered by the composition engine 116, which is given a high priority to ensure that the rendering occurs. For example, the global composition system 114 may manage which elements are updated, a frequency at which this update occurs (e.g., to switch from 60 Hz to 30 Hz), and so on. Thus, the global composition system 114 may help promote availability of resources of the computing device 102 for other uses, such as the applications 110 that provide the elements for rendering.

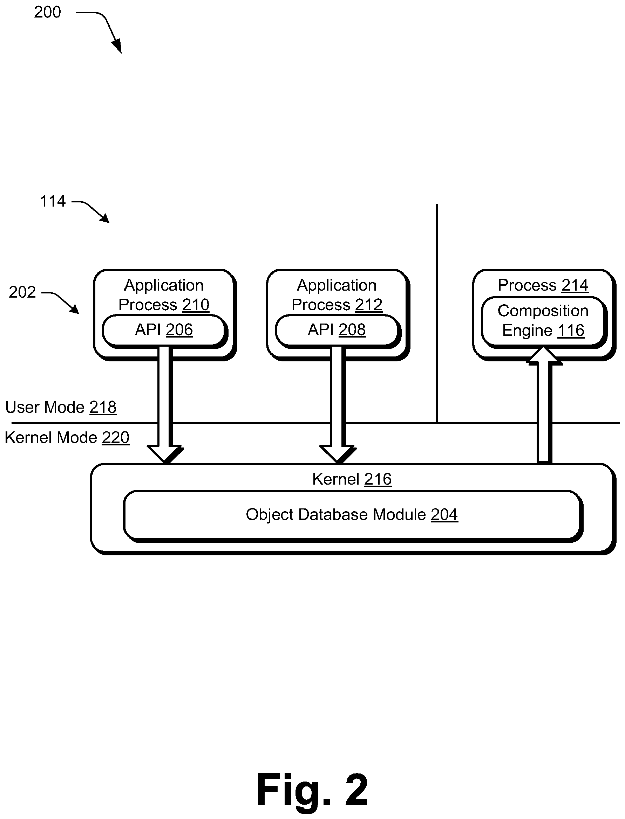

FIG. 2 illustrates an example system 200 in which the global composition system 114 is illustrated in greater detail as including the composition engine 116 of FIG. 1 as well as a user-mode library 202 and an object database module 204. The user-mode library 202 supports a variety of APIs 206, 208 that are illustrated as being used by respective application processes 210, 212 to interact with the object database module 204. The composition engine 116 is illustrated in this example system 200 as being executed within its own process 214.

Conventional use of a plurality of distributed composition engines protected execution of the engines as well as applications of a computing device from each other. For example, if a first application fails, a first conventional composition engine coupled to the first application may also fail. However, a second composition engine that was coupled to a different conventional composition engine was protected by the failure due to the lack of "knowledge" that the conventional composition engines had of each other.

In one or more implementations, the global composition system 114 may employ techniques to protect against corruption of state of the composition engine 116 by applications 110 that provide elements for rendering. One such technique is to employ the composition engine 116 within a kernel 216 of the operating system 108. Thus, the composition engine 116 may "trust" other components that are also executed in the kernel 216.

In this way, the global composition system 114 may employ a "trust boundary" between a user mode 218 and a kernel mode 220 such that checks are performed by the kernel. In one or more implementations, applications may be relied upon to determine "correctness" provided by the applications such as parameter checking to improve efficiency of processing done by the global composition system 114.

Another such technique involves tracking such that the global composition system 114 "knows" which data (e.g., elements for rendering) belongs to which application. Therefore, a failure of one application (e.g., a crash) does not affect the elements of another application. Further, the global composition system 114 may "clean up" the elements in case of such failure, such as to remove the elements from being rendered after a predetermined amount of time. In this way, the global composition system 114 may allow an application to fail gracefully and not affect other applications and corresponding elements to be rendered.

As illustrated the composition engine 116 is executed on a dedicated system process 214, which is different than processes used to execute other code such as other application processes 210, 212 of the computing device 102. Additionally, this process 214 may be assigned high levels of trust and priority. This process 214, for instance, may be trusted from a point of view of getting composition data and thus may be used for protected data, such as protected video data, email protected with rights management, and so on.

As illustrated in FIG. 2, the global composition system 114 may be implemented using three parts. A first part is illustrated as the composition engine 116, which is representative of functionality to perform the rendering, i.e., "do the drawing" to the display device 112. A second part is illustrated as a user-mode library 202, which is representative of an entity that is called by the applications by exposing application programming interfaces (API) 206, 208. For example, the user-mode library 202 may act as a "mail slot" to receive composition data from the applications, such as through use of a dynamic linked library (DLL).

A third part is illustrated as an object database module 204 that is illustrated as residing in the kernel 216. The object database module 204 is representative of functionality that is responsible for moving data between the user-mode library 202 and the composition engine 116.

The object database module 204 may also perform validation. For example, an application may call the user-mode library 202 to create an element, such as a bitmap. If the requested element does not meet criteria that are enforced by the object database module 204 (e.g., less than "N" number of pixels), the object database module 204 may return a failure message to the application that called the user-mode library 202. Thus, the object database module 204 may operate within the kernel 216 to control what is provided to the composition engine 116. A variety of other policies may be enforced by the object database module 204.

Therefore, the composition engine 116 may rely on data that is provided by the object database module 204 as complying with policies implemented by the object database module 204. In other words, the composition engine may assume that the data is valid and correct and thus suitable for rendering. Consequently, the validation may be performed a single time by the object database module 204 and then utilized by the composition engine 116 to perform the rendering without further validation.

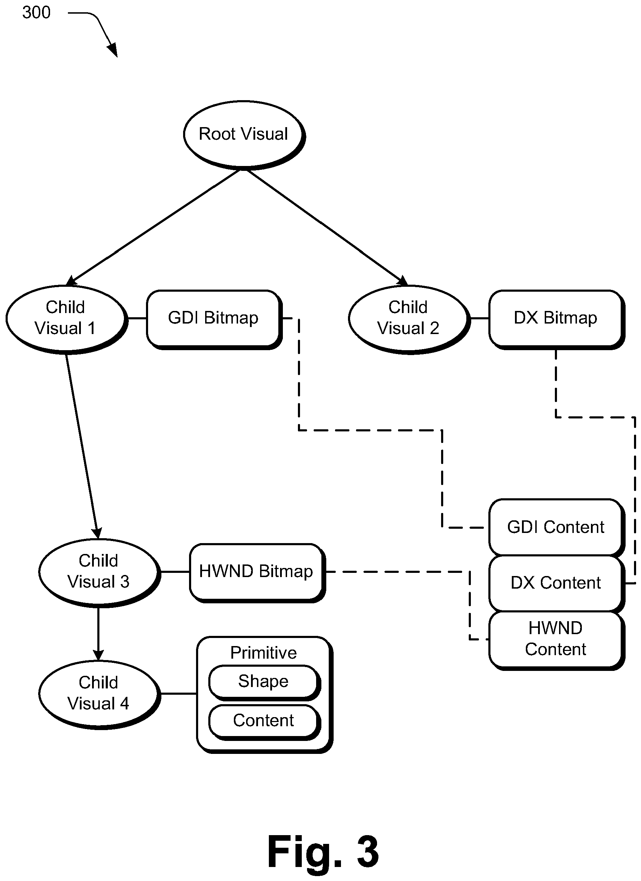

The object database module 204 may also be representative of functionality to inform the composition engine 116 of when data to be rendered has changed. For example, an API implemented via the user-mode library may be configured to consume a graph that describes what is to be rendered, an example of which is shown in FIG. 3. The graph 300 may include a list of elements to be rendered as well as a description of where to render the elements on the display device 112, which may include how the elements are to move in an instance of an animation.

Additionally, the elements to be rendered may be formed using sub-elements and thus the graph 300 may assume a hierarchical structure. Further, the graph 300 may describe how the elements are to be rendered, e.g., draw text once, render an animation, and so forth. Thus, the graph 300 may describe the elements and how the elements relate to each other.

The graph 300 represents objects that may be used by the composition engine 116 to render a scene. These may include bitmaps that are composed together and visuals that define the spatial relationships specifying where those bitmaps are composed. In this model, the bitmaps are the "what" and the visuals are the "how" of the composition engine 116. Those objects are arranged in a tree structure in the illustrated example and bound to a top-level or child window for composition. In this figure, a child visual 4 is also illustrated as pointing to the DX bitmap. This describes functionality of the composition system that allows developers to use the same content for multiple UI elements, which may help conserve resources of the computing device 102, e.g., memory.

In another example, the graph 300 may include one or more primitives to specify the "what" of the graph. Primitives may be thought of as one or more rendering instructions that specify a shape and content, which is shown as being associated with Child Visual 4 in the graph 300. Thus, an object associated with a visual may be configured using an entity other than a bitmap. The primitive, for instance, may include rendering instructions to "draw bitmap," "draw circle," "draw shape," and so on. In this way, the rendering instruction may be used in place of allocation of a bitmap by a graphics processing unit to render the element. For example, rather than allocate a bitmap for a white background of a user interface, a primitive may be used to instruct the composition engine 116 to "draw white." In response, the composition engine 116 may leverage a vertex and pixel shader in the graphics processing unit of the computing device 102 to draw the background. A variety of other examples are also contemplated, further discussion of which may be found in relation to the Primitive-Based Composition section below.

Returning again to FIG. 2, once received by the composition engine 116, the application does not need to further call the composition engine 116 to keep rendering the elements. Thus, the composition engine 116 may conserve resources as compared to conventional techniques that could involve an application making sixty calls per second to render an animation at a refresh rate of the display device 112. Thus, the application 110 may call an API of the user-mode library 202 to construct a structure and an API to construct elements to be rendered by the composition engine.

In order to make a change to the content that is rendered by the composition engine 116, the application may call another application programming interface of the user-mode library 202 to update the structure and/or elements. For example, the application may provide data via an update API to provide information to be used for a stock ticker animation.

In one or more implementations, batching techniques may also be leveraged to define which elements are to be rendered using frames. As previously described, the global composition system 114 may receive a variety of different elements for rendering at a variety of different rates. Accordingly, the global composition system 114 may support a structure in which a list of elements to be rendered together is formed. Thus, the global composition system 114 may implement a definition of begin and end for the elements in which the elements received in between are not rendered until the "end" is received. Thus, the frame may support an "all or nothing" approach to the rendering of elements for particular frames and ensure that the elements are rendered together for display when desired.

For example, the object database module 204 may track two different states for an application. The first state may reference elements that are for current display. The second state may reference elements that are to be displayed subsequent to the first state and that are changed. Thus, the second state may be used to build a list of elements for rendering by the composition engine 116 once the list is completed, e.g., once an indication is received from the application that the list is complete.

Once complete, the changes may be sent to the composition engine 116. Further, the timing of the receipt of the indication from the application that the list is complete may be used to determine when those changes are displayed, e.g., which frame. Thus, the composition engine 116 may receive a batch of changes described in one or more lists that are completed but lists that have not been indicated as complete are not communicated. This batching may thus define frames that are rendered by the composition engine 116. Further, this may help limit display of erroneous visual artifacts as could occur using conventional techniques that did not support such a definition. As should be readily apparent, an amount of time that corresponds to the frames may be set for a variety of different amounts as desired.

Thus, the object database module 204 may remember what was previously rendered by the composition engine 116 (e.g., elements and properties of those elements), as well as know what is going to be rendered. Therefore, the object database module 204 may determine which elements are changed by comparing this information. Accordingly, the object database module 204 may communicate information which describes this change without communicating information that is not changed to the composition engine 116.

Additionally, the use of frames may further improve efficiency. For example, an application may communicate data that describes that an object is to be moved a certain distance and return back to an original position. The object database module 204 may determine that this movement is to occur within a time period of a single frame. Accordingly, the object database module 204 may refrain from communicating this data to the composition engine 116 and rather have the object remain at its previous state. For instance, this movement may occur within a time period used to refresh a display device 112 and thus would not be viewable by a user, regardless.

In this way, the object database module 204 may discard intermediate states in the construction of the list that is to be provided to the composition engine 116 for rendering. This list may then be communicated in a variety of ways, such as an array of commands to be performed by the composition engine 116 to implement the changes. Further, this technique may also be used to address instances of unbounded data sent by application because a single instance is reported to the composition engine.

The object database module 204 and the composition engine 116 may also employ acknowledgement techniques that describe that a change was implemented. For example, the composition engine 116 may receive a communication from the object database module 204 that describes a change to be made. While the change is being made, the object database module 204 may wait to send additional changes until an acknowledgement has been received that the previous change was made. Once the acknowledgment is received by the object database module 204, the additional changes may then be communicated to the composition engine.

Further, this technique may be used to provide "throttling" and thus further conserve resources of the computing device 102. For example, an application may make a number of requests that exceed the rate at which a display device is refreshed. By using the frames and batching the changes, the amount of resources that would otherwise be consumed is reduced.

Applications that make changes to what is displayed by calling the API of the user-mode library 202 may be multithreaded. Accordingly, in one or more implementations the object database module 204 may employ techniques such that multiple calls from the multiple threads of a single application do not corrupt the state. This may be performed by the application locking its threads together, itself, e.g., one thread may be blocked while another thread of the application completes a task.

The changes from the multiple threads may then be stored in a queue which may be managed by the operating system 108, such as through interlocked access that may be employed for variables such that different threads may make "complete" changes before passing control to another thread. This may support the frame techniques described above to arrive at atomic units of work that are to be processed by the composition engine. Additionally, for frames in which updates are not received, execution of the composition engine may be paused until the next frame thereby further conserving resources of the computing device 102.

The kernel 216 may also add a variety of functionality in conjunction with the global composition system 114. For example, when an application fails (e.g., crashes) the kernel 216 may inform the composition engine 116 of this occurrence. The composition engine 116 may then perform techniques that are similar to those that would be used if the application ceased execution "naturally" through a normal exit procedure. In this way, the composition engine 116 may arrive to a "clean up" state such that the elements that correspond to the application are removed from display on the display device 112 of the computing device 102. Thus, this promotes robustness in the execution of the composition engine 116.

The execution of the composition engine 116 may also be secured by implementing a write-only API for the user-mode library 202. In this way, the composition engine 116 may generate the pixels but not expose those pixels back to the applications, thereby protecting the images from malicious parties.

As previously described, implementation of these techniques may also involve devices "outside" of the computing device 102, which may be distributed across one or more entities such as the web service 104. For example, these techniques may be employed to support terminal services, a remote desktop environment, and so on through communication of the batch of elements and properties (e.g., a composition tree such as a graph 300 of FIG. 3) via the network 106. Thus, the graph 300 may be generated elsewhere (e.g., through implementation of the user-mode library 202 and/or the object database module 204 on the web service 104) and transfer the composition tree for rendering by the composition engine 116 through execution of the computing device 102. In this way, the animations may be smoothly displayed even in instances in which the network 106 is unreliable.

The global composition system 114 may also be configured to take advantage of functionality available from hardware (e.g., a graphics card) to perform operations, which means operations can be made faster and show better performance. Examples of which include use of a graphics processing unit (GPU) to add transparency to a composition element (e.g., piece of UI, entire window), by blending two overlaying semitransparent windows, drawing geometric clips (rounded corners), and so on. When the hardware (e.g., GPU) is not available, the global composition system 114 may still perform these operations by "falling back" to software rendering.

### Primitive-Based Composition

Primitive-based composition via the composition engine 116 may be used to support global optimizations for rendering elements, such as occlusion detection, as well as to mix and match content from multiple applications in an efficient and secure fashion. The composition engine 116 and the global composition system 114 may thus enable primitive rendering with a combination of interfaces and methods that allow application frameworks to build primitive groups to represent elements and for association with a visual and final composition to the display device 112.

Furthermore, the global composition system 114 may be configured to allow for primitives to be added or removed without recreating a new primitive group. This may also be used to promote occlusion and dirty region optimizations at the primitive, primitive group and desktop level. Further, primitives used for composition of an application may be organized in such a way to minimize CPU cost by avoiding context switches and minimizing the number of "draw" calls to the graphics processing unit of the computing device 102, e.g., graphics card.

Additionally, the global composition system 114 may support the ability to share resources (e.g., color, floats, visuals, and so on) which allows applications to create cross-process/cross-device composition and animation scenarios. This includes combining/overlapping application's elements even if originated from different frameworks. Further, the global composition system 114 may make use of shared memory unlike conventional compositors that utilized multiple redundant memory duplications before the data was able to be read by a desktop/system compositor.

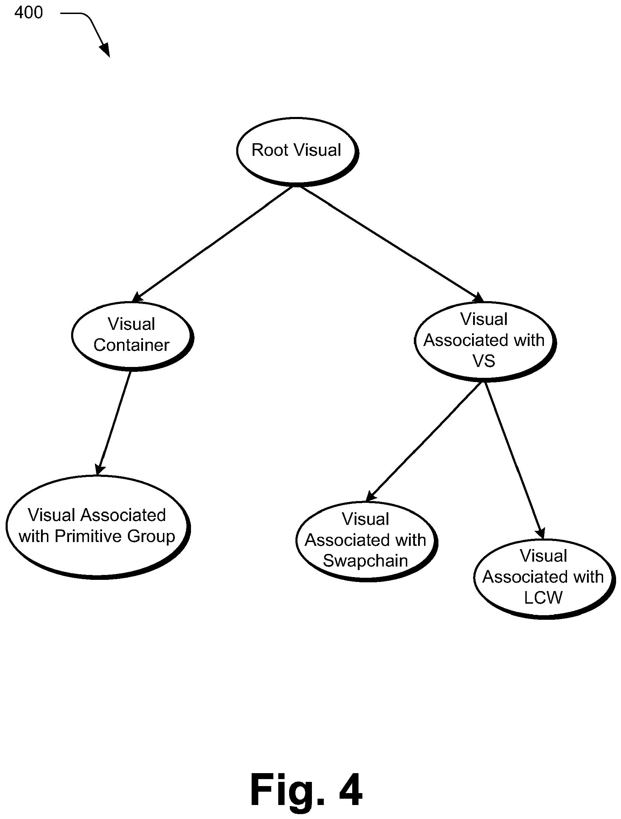

A visual is a basic element for composition and a plurality of visuals may be arranged to form a graph 400 as shown in FIG. 4, e.g., a global composition tree which was also described in relation to FIG. 3. Each node in the tree is representative of a visual, which may have a single parent or be configured as a root of the tree. Visuals may be associated with a variety of different surfaces, such as a logical surface, virtual surface, swap chain, and layered child window. Visuals may also be associated with a primitive group or may act as a "container" of visual properties. Visuals define the structure of the graph 400 whereas the surfaces and primitive groups define the content of the graph 400.

A primitive may be thought of as an entity that specifies a shape (e.g., rectangular, polygon, and so on) and content, such as a color, regular surface, virtual surface, and so forth through one or more rendering instructions. Thus, a primitive may be configured in a variety of ways. For example, a solid color primitive is a basic primitive that specifies a color and is immutable.

A dynamic color primitive is configured to include a pointer to a color object. The color of this primitive may be updated dynamically and set via a set color method. This may be utilized to support a variety of functionality, such as to update a color property to support a color animation. Other components of a primitive may also be updated dynamically as well.

A surface primitive includes a pointer to a surface and a transformation. This surface to which the surface primitive is pointing may be logical or virtual. Additionally, the transformation may be defined via a matrix that specifies a surface coordinate space. With these two parameters, an application may supply the composition engine 116 with a pointer to a surface and transformation (e.g., a matrix representation of a translation/offset) to define a position of the surface with respect to a surface primitive.

A variety of different parameters may be utilized as part of the primitive, which may apply to solid color, dynamic color, surface primitives, and so on. Primitive parameters such as transform, interpolation mode, and so on may be used to determine the content to be added as part of the primitive group. For a visual, visual properties can be applied to a collection of primitives and updated anytime. Thus, the composition engine may provide a great deal of freedom regarding what is eventually shown on the screen. For example, text may be created via primitive parameters and then animated or highlighted via a visual property.

Examples of parameters include rectangle, color, opacity, primitive transform, transformed opacity mask, and border modes. The rectangle parameter may use floats to define coordinates of the rectangle that are usable to calculate a width and height, although other shapes other than rectangles are also contemplated such as triangle, convex polygons, nine-grid, and so on which may be used to minimize a memory footprint and bandwidth. For the color parameter, depending on the type of primitive (i.e., solid color versus dynamic color), this parameter may accept a value for the solid color primitive or a pointer to a color object for the dynamic color primitive.

The parameter for opacity may be set from zero to one, which may be used to show transparency for an entire primitive rectangle or other defined shape. A primitive transform parameter may be specified as a matrix to define scaling, rotation, skewing, translation, or other transformation of the primitive's content. For a transformed opacity mask, the parameter may be configured as a pointer to an opacity surface (e.g., logical surface) and a transformation. The transformation is used to determine the opacity texture coordinate space. The opacity surface may be defined by a bitmap, where just the alpha value is taken into account. Opacity masks enable a framework to make portion of a primitive transparent, such as to create a gradient and so on.

A primitive may also include parameters to define a border mode for a border of a shape defined by the primitive, e.g., a rectangle as described above. The border mode may be specified for an edge of the shape, such as aliased, anti-aliased, aliased and extended (e.g., by 0.5 pixels in screen space), aliased and reduced (e.g., by 0.5 pixels in screen space), and so on. This may be used to support a variety of functionality, such as to ensure that a edges of a shape which land on a sub-pixel position coincide with an actual pixel boundary.

A collection of primitives form a primitive group, which may be formed as a linked list of primitives having rendering instructions that define the content to be associated with a visual. A primitive group may contain a large number of primitives, transforms and resources such as bitmaps and color resources. The global composition system 114 may be configured to support a mutually shared format of a primitive group's command buffers to avoid unnecessary memory copy plus redundant parsing when the primitive group data is transferred from an application process 210 to the object database module 204 and eventually the composition engine 116.

For example, a primitive group can be updated by allowing applications to add and remove primitives as well as split and merge primitive groups. Incremental updates may be beneficial in avoiding recreation of the full linked list each time an update occurs that impacts a relatively low number of primitives of the list.

The composition engine 116 may be configured to maintain a linked list of dirty primitive groups and may be configured to call each one to rebuild its buffers during a "commit" command. Once built, the primitive group is marked clean and may be removed from the device's dirty list.

A primitive group may contain primitives that point to different bitmap or opacity surfaces which are read by the rendering pipeline of the composition engine 116. During the rendering process, each time a new surface is encountered, the current rendering is flushed by the composition engine and the new surfaces are set as the input surfaces. However, switching among different input textures is an expensive operation. Therefore, to avoid expensive texture switching, the composition engine 116 may reorder and group primitives into different batches. Each batch may contain a list of primitives which each point to the same color and opacity surfaces.

Additionally, the global composition system 114 may be configured to support use of shared memory to both move resource payloads from the application to the composition engine 116 and to implement the channel transport itself. Memory sections may be created in kernel 216, and subsequently shared with the composition engine 116 user mode 218 process contexts. As a result, when applications generate command data, the applications may write to memory which can be read directly by the composition engine 116, thus eliminating the vast majority of redundant memory copying that takes place before processing by the composition engine 116. Thus, the global composition system 114 may be configured to support primitive-based global composition.

The global composition system 114 may expose building blocks (e.g., primitives, primitive groups and corresponding parameters, surface factory, visuals and its properties) for a developer to build a rich primitive based and globally optimized framework. Further, the framework may be built without being tied to a specific rendering technology. A variety of different functionality may be supported, examples of which are described in the following discussion and shown in the corresponding figures.

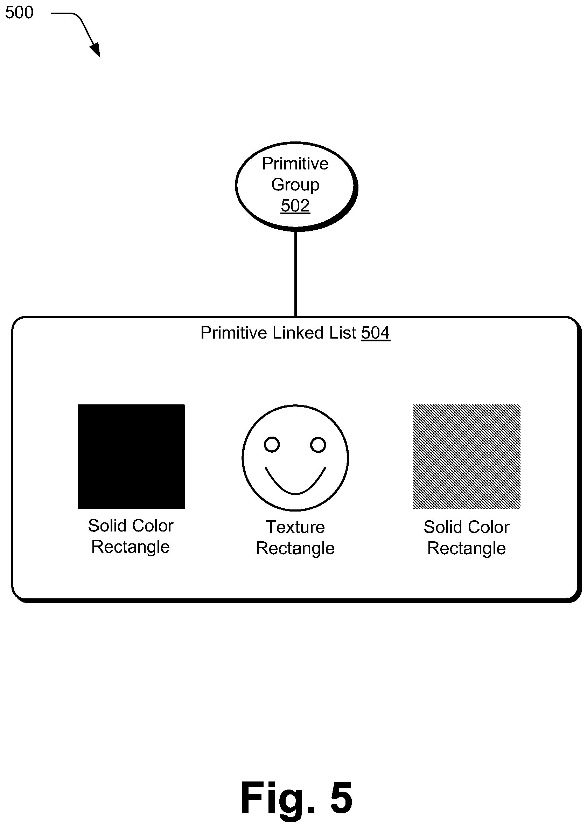

FIG. 5 depicts an example implementation 500 of a primitive group. The primitive group 502 includes a primitive linked list 504 that includes a solid color rectangle, texture rectangle, and a solid color rectangle. Thus, this is an example of a sample primitive group based visual that includes different primitive types that include a solid color rectangle, a texture rectangle, and another solid color rectangle.

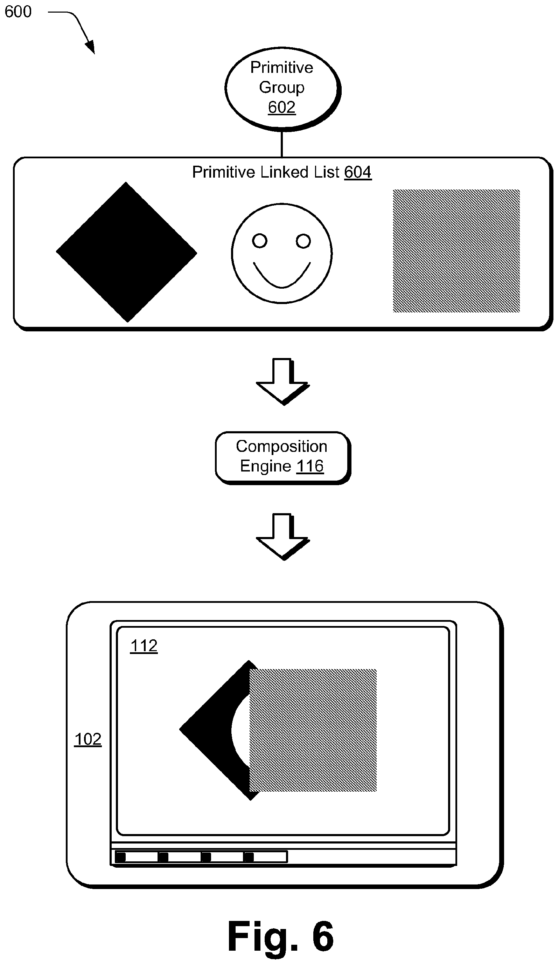

FIG. 6 depicts an example implementation 600 of a primitive group. The primitive group 602 also includes a primitive linked list 604 that includes primitives. In this example, a rectangle size is specified as (0,0,100,100) and opacity is set as "1." For the first primitive in the primitive linked list 604, a color has been set along with a matrix transformation that is equivalent to a rotation of ninety degrees. There is no transformed opacity mask and the border modes are anti-aliased. For the second primitive, an alpha mask has been passed to leave a circular shape belonging to a smiley face as illustrated. For the third primitive, a color is also set along with a matrix transformation that is equivalent to a scale by "1.2" in both an "x" axis and "y" axis.

Furthermore, a matrix is also specified to translate each of the primitives in the primitive linked list 604. For the first primitive, a matrix to perform the rotation is used as described above along with an "x" matrix transform that is equivalent to a translation of "20,20." For the second primitive, a matrix transform equivalent to "25, 20" is specified. Further, for the third primitive a matrix transform equivalent to a scale by "1.2" from the previous example is employed along with an "x" translation of "30, 20." The composition engine 116 may then render these primitives of the primitive linked list 604 for display on the display device 112 of the computing device 102 using a graphics processor as previously described.

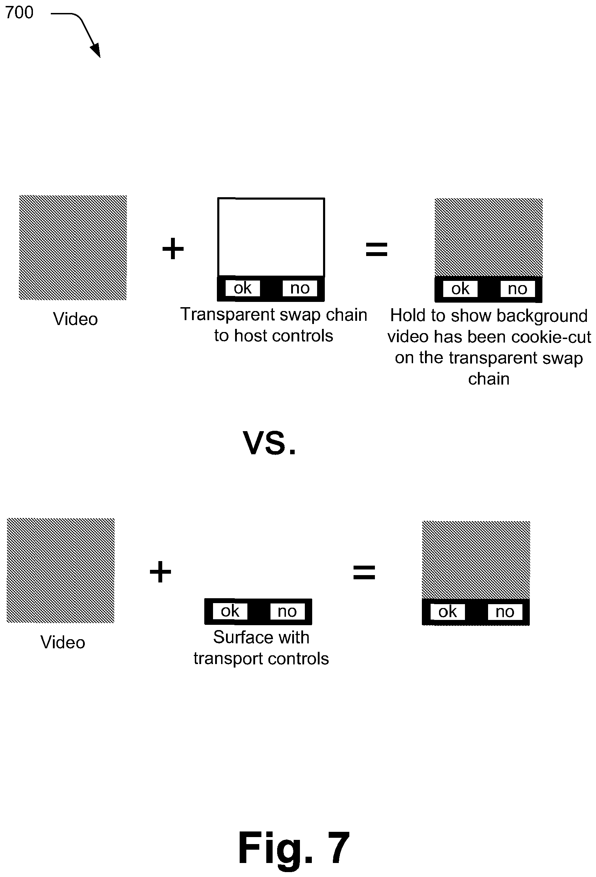

FIG. 7 depicts an example 700 comparison of techniques to render a video player with transport controls that are blended into a single layer using the composition engine 116. Some conventional techniques play a trick of creating a transparent surface or texture to layer user interface elements for video and other cases such as chatting scenarios. This ends up resulting in an additional double buffered surface to host elements that are to be layered on top of the surface.

For example, rather than use a video with a transparent swap chain to host controls to show background video that has been cookie-cut on the transparent swap chain, a video with a surface having transport controls may be specified. Thus, rather than pay to render a full screen transparent swap chain (two video memory textures/buffers), a small surface may be used to host the control and the composition engine 116 may be used to blend the video and the controls into a single layer. Further, use of a single composition engine may support synchronization of rendering of content and animations across various applications through the same API. In this way, the content rendered by one application may be synchronized with content rendered from another application.

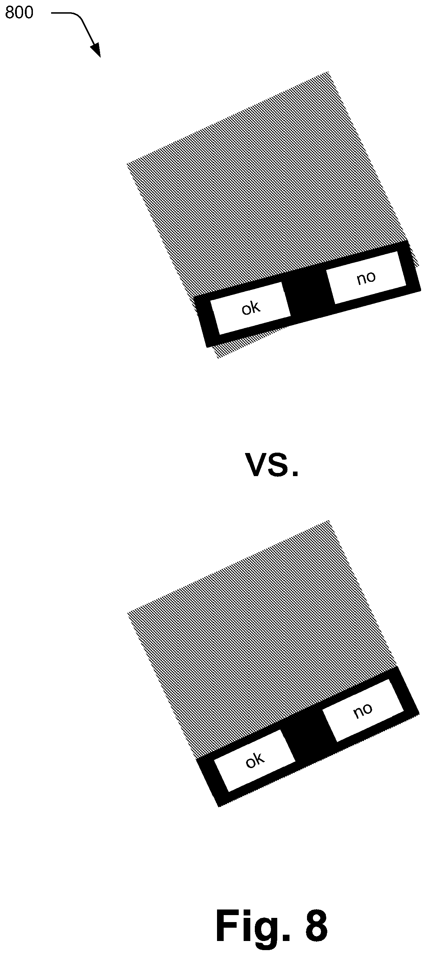

FIG. 8 depicts an example 800 of content synchronization techniques using the composition engine 116. One issue related to airspace is synchronization. For example, two different unrelated surfaces may be used to compose what looks like a single surface to an end user. However, issues may arise in which the surfaces are not able to by synchronized and manipulated as a single element in a user interface.

A transformation or panning manipulation, for instance, may cause rendering of one of these elements to lag in relation to the other, causing visual issues as illustrated in the example 800. Accordingly, through use of a single composition engine 116 these issues may be reduced and even eliminated. Other examples are also contemplated.

### Example Procedures

The following discussion describes primitive-based composition techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to FIGS. 1-8.

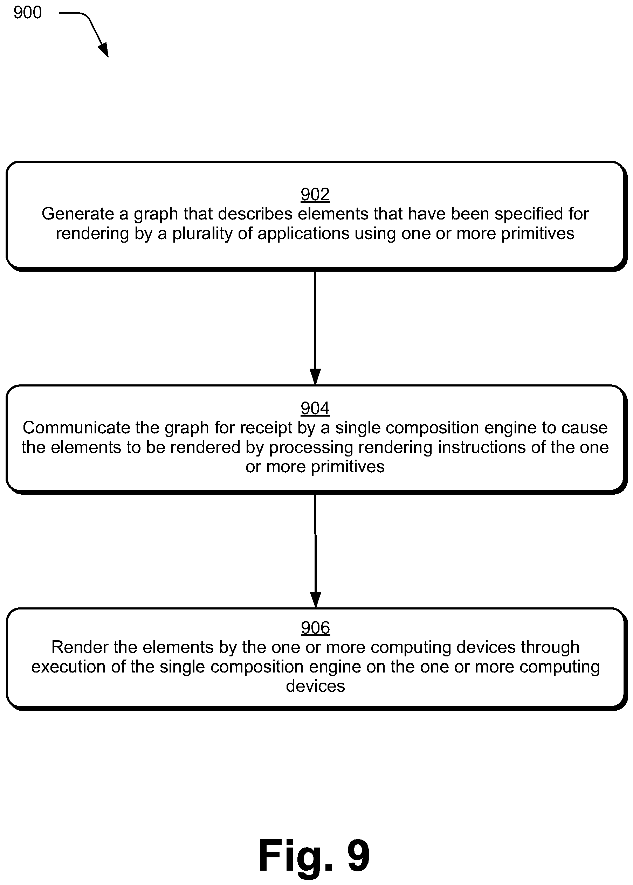

FIG. 9 depicts a procedure 900 in an example implementation in which a graph is generated having primitives to cause rendering of elements by a computing device. A graph is generated that describes elements that have been specified for rendering by a plurality of applications using one or more primitives (block 902). The graph 400, for instance, may include primitives as well as other non-primitive based elements.

The graph is communicated for receipt by a single composition engine to cause the elements to be rendered by processing rendering instructions of the one or more primitives (block 904). The elements are rendered by the one or more computing devices through execution of the single composition engine on the one or more computing devices (block 906). The rendering instructions, for instance, may be used to instruct a graphics processing unit to generate elements for display by a display device of the computing device.

### Example System and Device

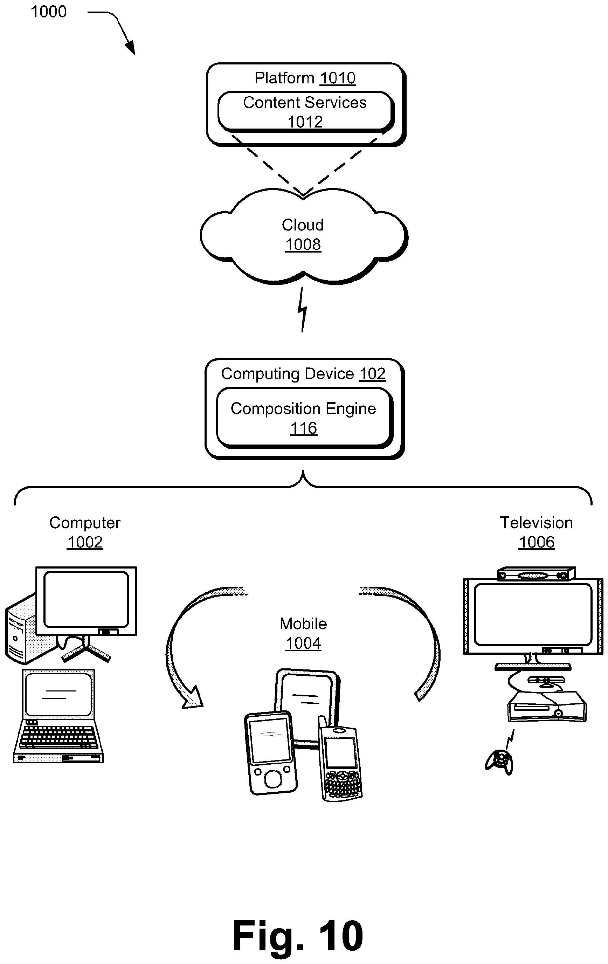

FIG. 10 illustrates an example system 1000 that includes the computing device 102 as described with reference to FIG. 1. The example system 1000 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 1000, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link. In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the computing device 102 may assume a variety of different configurations, such as for computer 1002, mobile 1004, and television 1006 uses. Each of these configurations includes devices that may have generally different constructs and capabilities, and thus the computing device 102 may be configured according to one or more of the different device classes. For instance, the computing device 102 may be implemented as the computer 1002 class of a device that includes a personal computer, desktop computer, a multi-screen computer, laptop computer, netbook, and so on.

The computing device 102 may also be implemented as the mobile 1004 class of device that includes mobile devices, such as a mobile phone, portable music player, portable gaming device, a tablet computer, a multi-screen computer, and so on. The computing device 102 may also be implemented as the television 1006 class of device that includes devices having or connected to generally larger screens in casual viewing environments. These devices include televisions, set-top boxes, gaming consoles, and so on. The techniques described herein may be supported by these various configurations of the computing device 102 and are not limited to the specific examples the techniques described herein.

The cloud 1008 includes and/or is representative of a platform 1010 for content services 1012. The platform 1010 abstracts underlying functionality of hardware (e.g., servers) and software resources of the cloud 1008. The content services 1012 may include applications and/or data that can be utilized while computer processing is executed on servers that are remote from the computing device 102. Content services 1012 can be provided as a service over the Internet and/or through a subscriber network, such as a cellular or Wi-Fi network.

The platform 1010 may abstract resources and functions to connect the computing device 102 with other computing devices. The platform 1010 may also serve to abstract scaling of resources to provide a corresponding level of scale to encountered demand for the content services 1012 that are implemented via the platform 1010. Accordingly, in an interconnected device embodiment, implementation of functionality of the functionality described herein may be distributed throughout the system 1000. For example, the functionality may be implemented in part on the computing device 102 as well as via the platform 1010 that abstracts the functionality of the cloud 1008.

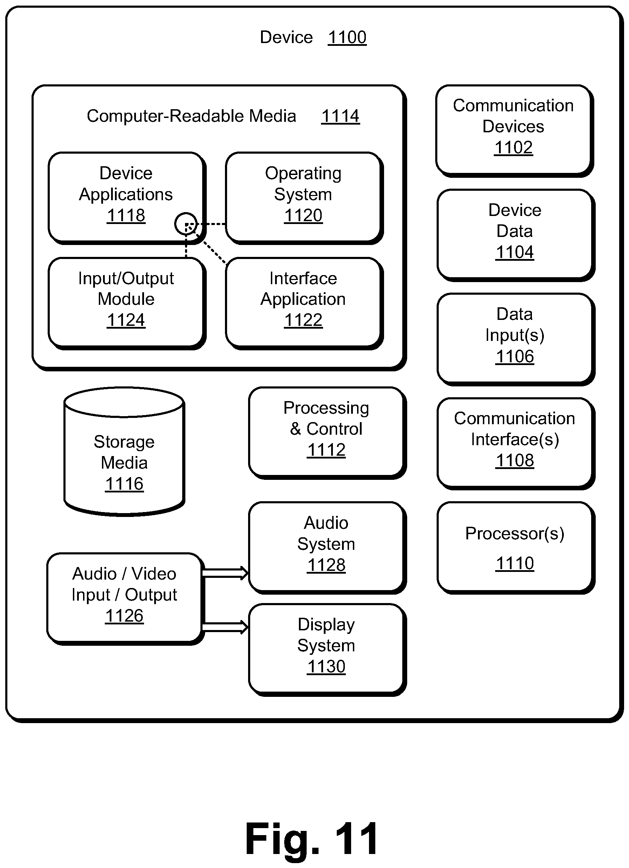

FIG. 11 illustrates various components of an example device 1100 that can be implemented as any type of computing device as described with reference to FIGS. 1-10 to implement embodiments of the techniques described herein. Device 1100 includes communication devices 1102 that enable wired and/or wireless communication of device data 1104 (e.g., received data, data that is being received, data scheduled for broadcast, data packets of the data, etc.). The device data 1104 or other device content can include configuration settings of the device, media content stored on the device, and/or information associated with a user of the device. Media content stored on device 1100 can include any type of audio, video, and/or image data. Device 1100 includes one or more data inputs 1106 via which any type of data, media content, and/or inputs can be received, such as user-selectable inputs, messages, music, television media content, recorded video content, and any other type of audio, video, and/or image data received from any content and/or data source.

Device 1100 also includes communication interfaces 1108 that can be implemented as any one or more of a serial and/or parallel interface, a wireless interface, any type of network interface, a modem, and as any other type of communication interface. The communication interfaces 1108 provide a connection and/or communication links between device 1100 and a communication network by which other electronic, computing, and communication devices communicate data with device 1100.

Device 1100 includes one or more processors 1110 (e.g., any of microprocessors, controllers, and the like) which process various computer-executable instructions to control the operation of device 1100 and to implement embodiments of the techniques described herein. Alternatively or in addition, device 1100 can be implemented with any one or combination of hardware, firmware, or fixed logic circuitry that is implemented in connection with processing and control circuits which are generally identified at 1112. Although not shown, device 1100 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

Device 1100 also includes computer-readable media 1114, such as one or more memory components, examples of which include random access memory (RAM), non-volatile memory (e.g., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. Device 1100 can also include a mass storage media device 1116.

Computer-readable media 1114 provides data storage mechanisms to store the device data 1104, as well as various device applications 11 18 and any other types of information and/or data related to operational aspects of device 1100. For example, an operating system 1120 can be maintained as a computer application with the computer- readable media 1114 and executed on processors 1110. The device applications 1118 can include a device manager (e.g., a control application, software application, signal processing and control module, code that is native to a particular device, a hardware abstraction layer for a particular device, etc.). The device applications 1118 also include any system components or modules to implement embodiments of the techniques described herein. In this example, the device applications 1118 include an interface application 1122 and an input/output module 1124 that are shown as software modules and/or computer applications. The input/output module 1124 is representative of software that is used to provide an interface with a device configured to capture inputs, such as a touchscreen, track pad, camera, microphone, and so on. Alternatively or in addition, the interface application 1122 and the input/output module 1124 can be implemented as hardware, software, firmware, or any combination thereof. Additionally, the input/output module 1124 may be configured to support multiple input devices, such as separate devices to capture visual and audio inputs, respectively.

Device 1100 also includes an audio and/or video input-output system 1126 that provides audio data to an audio system 1128 and/or provides video data to a display system 1130. The audio system 1128 and/or the display system 1130 can include any devices that process, display, and/or otherwise render audio, video, and image data. Video signals and audio signals can be communicated from device 1100 to an audio device and/or to a display device via an RF (radio frequency) link, S-video link, composite video link, component video link, DVI (digital video interface), analog audio connection, or other similar communication link. In an embodiment, the audio system 1128 and/or the display system 1130 are implemented as external components to device 1100. Alternatively, the audio system 1128 and/or the display system 1130 are implemented as integrated components of example device 1100.

## Claims

1. A system comprising one or more modules implemented at least partially in hardware, the one or more modules configured to implement a single composition engine (116) that is configured for accessibility via one or more application programming interfaces (206, 208) to a plurality of applications (110)
**characterized in that** the single composition engine is configured to render primitives having one or more rendering instructions for display of one or more visuals on a display device, wherein the one or more visuals are associated with a primitive group (502, 602), which is formed as a linked list of primitives (504, 604), and wherein the system is a global composition system (114) which is configured to allow applications to add or remove primitives without recreating a new primitive group.

2. A system as described in claim 1, wherein the single composition engine (116) is configured to maintain a linked list of dirty primitive groups and is configured to call the dirty primitive groups to rebuild their buffers during a commit command.

3. A system as described in claim 1, wherein the primitive is an entity which includes a shape and content.

4. A system as described in claim 3, wherein the one or more visuals are associated with a logical surface, a virtual surface, or a gradient surface.

5. A system as described in claim 3, wherein the primitive is a solid color primitive, a dynamic color primitive, or a surface primitive.

6. A system as described in claim 1, wherein the one or more application programming interfaces (206, 208) are configured to receive parameters that include specification of a rectangle, color, or opacity.

7. A system as described in claim 1, wherein the one or more application programming interfaces (206, 208) are configured to receive parameters that include specification of a primitive transform, a transformed opacity mask, or one or more antialiasing modes.

8. A system as described in claim 7, wherein the one or more antialiasing modes include aliased, anti-aliased, aliased and extended, or aliased and reduced.

9. A method implemented by one or more computing devices, the method comprising:
generating (902) a graph that describes visuals that have been specified for rendering by a plurality of applications (110) using one or more primitives,
**characterized in that** the visuals are associated with a primitive group (502 ,602),
which is formed as a linked list of primitives and that the method further comprises:
communicating (904) the graph for receipt by a single composition engine to cause the visuals to be rendered by processing rendering instructions of the one or more primitives and
adding or removing primitives without recreating a new primitive group (502, 602).

10. A method as described in claim 9, further comprising maintaining a linked list of dirty primitive groups and calling the dirty primitive groups to rebuild their buffers during a commit command.

11. A method as described in claim 9, further comprising rendering the visuals by the one or more computing devices through execution of the single composition engine (116) on the one or more computing devices.

12. A method as described in claim 9, wherein the graph is a global composition tree.

## Patentansprüche

1. System, das ein oder mehrere Module umfasst, die wenigstens teilweise in Hardware implementiert sind, wobei das eine oder die mehreren Module konfiguriert sind, um eine Einzelzusammensetzungsmaschine (116) zu implementieren, welche dafür konfiguriert ist, um über eine oder mehrere Anwendungsprogrammierschnittstellen (206, 208) auf mehrere Anwendungen (110) zuzugreifen,
**dadurch gekennzeichnet, dass** die Einzelzusammensetzungssmaschine dafür konfiguriert ist, um Primitive mit einer oder mehreren Render-Anweisungen zur Anzeige von einem oder mehreren sichtbaren Objekten auf einer Anzeigevorrichtung zu rendern, wobei das eine oder die mehreren sichtbaren Objekte in einer primitiven Gruppe (502, 602) verknüpft sind, welche als eine verknüpfte Liste von Primitiven (504, 604) gebildet ist, und wobei das System ein globales Zusammensetzungssystem (114) ist, welches dafür konfiguriert ist, um Anwendungen zu ermöglichen, Primitive ohne Wiederherstellung einer neuen primitiven Gruppe hinzuzufügen oder zu entfernen.

2. System nach Anspruch 1, wobei die Einzelzusammensetzungsmaschine (116) dafür konfiguriert ist, um eine verknüpfte Liste von schmutzigen primitiven Gruppen zu erhalten, und dazu konfiguriert ist, um die schmutzige primitiven Gruppen aufzurufen, um ihre Puffer während eines Übergebungsbefehls wiederherzustellen.

3. System nach Anspruch 1, wobei das Primitiv eine Einheit ist, welche eine Form und einen Inhalt aufweist.

4. System nach Anspruch 3, wobei das eine oder die mehreren sichtbaren Objekte mit einer logischen Oberfläche, einer virtuellen Oberfläche oder einer Gradienten-Oberfläche verknüpft sind.

5. System nach Anspruch 3, wobei das Primitiv ein festes farbiges Primitiv, eine dynamisches farbiges Primitiv oder ein Oberflächenprimitiv ist.

6. System nach Anspruch 1, wobei die eine oder die mehreren Anwendungsprogrammierschnittstellen (206, 208) dafür konfiguriert sind, Parameter zu empfangen, welche eine Spezifikation eines Rechtecks, einer Farbe oder einer Opazität aufweisen.

7. System nach Anspruch 1, wobei die eine oder die mehreren Anwendungsprogrammierschnittstellen (206, 208) dafür konfiguriert sind, Parameter zu empfangen, welche eine Spezifikation einer Primitivübertragung, eine übertragenen Opazitätsmaske oder einer oder mehrerer Antialiasing-Betriebsarten aufweisen.

8. System nach Anspruch 7, wobei die eine oder die mehreren Antialiasing-Betriebsarten aliast, anti-aliast, aliast und erweitert oder aliast und reduziert aufweisen.

9. Verfahren, welches in einer oder mehreren Computervorrichtungen implementiert ist, wobei das Verfahren Folgendes umfasst:
Generieren (902) eines Graphen, der sichtbare Objekte beschreibt, welche zum Rendern durch mehrere Anwendungen (110) unter Verwendung eines oder
mehrerer Primitive spezifiziert wurden,
**dadurch gekennzeichnet, dass** die sichtbaren Objekte mit einer primitiven Gruppe (502, 602) verknüpft sind, welche als eine verknüpfte Liste von Primitiven gebildet ist, und das Verfahren ferner Folgendes umfasst:
Kommunizieren (904) des Graphens zum Empfangen durch eine Einzelzusammensetzungsmaschine, um ein Rendern der sichtbaren Objekte durch Bearbeiten von Rendering-Anweisungen der einen oder mehreren Primitive zu bewirken, und
Hinzufügen oder Entfernen von Primitiven ohne Wiederherstellen einer neuen primitiven Gruppe (502, 602).

10. Verfahren nach Anspruch 9, das ferner ein Erhalten einer verknüpften Liste von schmutzigen primitive Gruppen und ein Aufrufen der schmutzigen primitiven Gruppen zum Wiederherstellen ihrer Puffer währen eines Übertragungsbefehls umfasst.

11. Verfahren nach Anspruch 9, das ferner ein Rendern der sichtbaren Objekte durch die eine oder die mehreren Computervorrichtungen durch Ausführen der Einzelzusammensetzungsmaschine (116) auf den einen oder den mehreren Computervorrichtungen umfasst.

12. Verfahren nach Anspruch 9, wobei der Graph ein globaler Zusammensetzungsbaum ist.

## Revendications

1. Système comprenant un ou plusieurs modules mis en oeuvre au moins partiellement dans un matériel, lesdits un ou plusieurs modules étant configurés pour mettre en oeuvre un moteur de composition unique (116) qui est configuré pour permettre un accès, par l'intermédiaire d'une ou de plusieurs interfaces de programmation d'application (206, 208), à une pluralité d'applications (110),
**caractérisé en ce que** le moteur de composition unique est configuré pour reproduire des primitives ayant une ou plusieurs instructions de rendu pour l'affichage d'un ou de plusieurs éléments visuels sur un dispositif d'affichage, dans lequel lesdits un ou plusieurs éléments visuels sont associés à un groupe de primitives (502, 602), qui est formé en tant que liste liée de primitives (504, 604), et dans lequel le système est un système de composition global (114) qui est configuré pour permettre à des applications d'ajouter ou de retirer des primitives sans recréer un nouveau groupe de primitives.

2. Système selon la revendication 1, dans lequel le moteur de composition unique (116) est configuré pour maintenir une liste liée de groupes de primitives sales et est configuré pour appeler les groupes de primitives sales pour reconstruire leurs tampons pendant une commande de validation.

3. Système selon la revendication 1, dans lequel la primitive est une entité qui comprend une forme et un contenu.

4. Système selon la revendication 3, dans lequel lesdits un ou plusieurs éléments visuels sont associés à une surface logique, une surface virtuelle, ou une surface de gradient.

5. Système selon la revendication 3, dans lequel la primitive est une primitive de couleur unie, une primitive de couleur dynamique, ou une primitive de surface.

6. Système selon la revendication 1, dans lequel lesdites une ou plusieurs interfaces de programmation d'application (206, 208) sont configurées pour recevoir des paramètres qui comprennent la spécification d'un rectangle, d'une couleur, ou d'une opacité.

7. Système selon la revendication 1, dans lequel lesdites une ou plusieurs interfaces de programmation d'application (206, 208) sont configurées pour recevoir des paramètres qui comprennent une spécification d'une transformation de primitive, d'un masque d'opacité transformée, ou d'un ou de plusieurs modes anticrénelage.

8. Système selon la revendication 7, dans lequel lesdits un ou plusieurs modes anticrénelage comprennent crénelé, anticrénelé, crénelé et étendu, ou crénelé et réduit.

9. Procédé réalisé par un ou plusieurs dispositifs informatiques, le procédé comprenant :
la génération (902) d'un graphe qui décrit des éléments visuels qui ont été spécifiés pour être reproduits par une pluralité d'applications (110) en utilisant une ou plusieurs primitives,
**caractérisé en ce que** les éléments visuels sont associés à un groupe de primitives (502, 602), qui est formé en tant que liste liée de primitives, et **en ce que** le procédé comprend en outre :
la communication (904) du graphe pour sa réception par un moteur de composition unique pour faire en sorte que les éléments visuels soient reproduits en traitant les instructions de rendu desdites une ou plusieurs primitives, et
l'ajout ou le retrait de primitives sans recréer un nouveau groupe de primitives (502, 602).

10. Procédé selon la revendication 9, comprenant en outre le maintien d'une liste liée de groupes de primitives sales et l'appel des groupes de primitives sales pour reconstruire leurs tampons pendant une commande de validation.

11. Procédé selon la revendication 9, comprenant en outre le rendu des éléments visuels par lesdits un ou plusieurs dispositifs informatiques par l'exécution du moteur de composition unique (116) sur lesdits un ou plusieurs dispositifs informatiques.

12. Procédé selon la revendication 9, dans lequel le graphe est une arborescence de composition globale.
